# EUROPÄISCHE PATENTANMELDUNG

(11) **EP 3 782 475 A1**
(43) Veröffentlichungstag der Anmeldung: **24.02.2021**
(21) Anmeldenummer: 19192660.9
(22) Anmeldetag: 20.08.2019
(51) Int. Cl.: A23J 3/14, A23J 3/22, A23J 3/26

(54) **VERFAHREN ZUR HERSTELLUNG VON PROTEINHALTIGEN LEBENSMITTELN**

(71) Anmelder: Bühler AG, 9240 Uzwil (CH)
(72) Erfinder: Weinberger, Michael, 5200 Brugg (CH); Stirnemann, Eric, 8092 Zürich (CH); Schmucki, Julia, 8092 Zürich (CH)
(74) Vertreter: Hepp Wenger Ryffel AG

(57) **Zusammenfassung**

Die vorliegende Erfindung betrifft ein Verfahren zur Herstellung von proteinhaltigen Lebensmitteln, enthaltend die Schritte: Eindosieren von Rohstoffen in einen Extruder, wobei mindestens ein Rohstoff ein Protein ist, vorzugsweise ein pflanzliches Protein, Mischen der Rohstoffe im Extruder zur Erzeugung einer Mischung, Extrudieren der Mischung zur Erzeugung eines Extrudats, und Herausführen des Extrudats aus dem Extruder durch eine Kühldüse unter Abkühlung des Extrudats auf eine Temperatur von weniger als 100°C, wobei im Extruder durch Bereitstellung eines Gases, durch Einleiten des Gases in den Extruder oder durch Bildung des Gases aufgrund einer Reaktion einer als Rohstoff zugegebenen gasbildenden Verbindung mit einer als Rohstoff zugegebenen gasfreisetzenden Verbindung, eine kontrollierte Porenbildung durchgeführt wird.

## Beschreibung

Die vorliegende Erfindung betrifft ein Verfahren zur Herstellung von texturierten, proteinreichen Lebensmitteln aus wenigstens einem Rohmaterial mit einem Proteingehalt zwischen 35 Gew.-% und 90 Gew.-%, insbesondere auf der Basis von pflanzlichen Proteinen, wobei solche Lebensmittel nachfolgend auch als proteinhaltigen Texturate oder alternative Fleischprodukte (engl. "meat alternatives") bezeichnet werden.

Im Zuge der Nachhaltigkeitswelle gewinnen alternative Fleischprodukte auf der Basis von pflanzlichen Proteinen zunehmend mehr an Bedeutung. Herkömmliche Verfahren zu deren Herstellung enthalten üblicherweise die folgenden Schritte:
- Verwiegen/Dosieren der Rohstoffe,
- Mischen der Rohstoffe,
- Vorkonditionieren (optional),
- Extrudieren, insbesondere unter Zuhilfenahme einer Kühldüse,
- Schneiden.

Eine wesentliche Herausforderung für die Akzeptanz alternativer Fleischprodukte besteht darin, ihre Textur und ihre haptischen Eigenschaften (Biss) soweit wie möglich den entsprechenden Eigenschaften echter Fleischprodukte anzugleichen. Die mit den bekannten Verfahren hergestellten und auf dem Markt verfügbaren alternativen Fleischprodukte unterscheiden sich allerdings deutlich in ihrer Textur und ihrem Biss von echtem Fleisch. Dies betrifft die Faserigkeit sowie auch die Zartheit beziehungsweise Saftigkeit (engl. "juiciness") der bisher erhältlichen Texturate.

Die Ursachen hierfür liegen darin, dass es sich um eine sehr energiereiche Prozessführung handelt, in der thermische Energie (Heizen der Extrudergehäuse und Kühlwasserführung in einer Kühldüse beziehungsweise Einleitung von Dampf in das System) und mechanische Energie (spezifische mechanische Energieeinleitung) eingebracht wird. Allerdings führt eine erhöhte Zuführung von Energie in den Prozess zwangsläufig auch zu einer stärkeren Texturierung, welche sich wiederum negativ auf den Biss beziehungsweise die Zartheit des Endprodukts auswirkt - die Produkte weisen einen gummiartigen Charakter auf.

Im Anschluss an den Extrusionsprozess ist ausserdem ein Einfrieren des geschnittenen Extrudates (Endprodukt) über einen definierten Zeitraum (mehrere Tage) notwendig. Der Gefrierprozess modifiziert die Textur derart, dass die Einlagerung einer zweiten Phase möglich wird und somit Biss und Saftigkeit des Extrudates positiv beeinflusst werden. Alternativ zum Einfrieren werden die Extrudate wahlweise gekocht und/oder mit einer Vakuumbeschichtung beaufschlagt. Beide Verfahrensschritte ermöglichen die Einlagerung einer zweiten Phase, sind aber auch sehr aufwendig.

In der EP 1 059 040 A1 wurde ein Verfahren beschrieben, bei welchem proteinreiches Material in einem Extruder verarbeitet und durch Herausleiten durch eine am Extruderende angeordnete Kühldüse auf eine Temperatur von 100°C oder weniger gekühlt.

In der WO 96/34539 A1 wurde ein Verfahren beschrieben, bei welchem proteinreiches Material in einem Extruder verarbeitet und durch Herausleiten durch eine am Extruderende angeordnete Kühldüse gekühlt wurde. Das so erhaltene Produkt ist echtem Fleisch nicht ausreichend stark ähnlich.

In der WO 2012/158023 A1 wurde ein Verfahren zur Herstellung eines Sojabohnenproteinextrudats, aus einer wässrigen Sojaproteinzusammensetzung durch Extrusion beschrieben. Die mindestens 50 Gew.-% Wassergehalt aufweisende Zusammensetzung wird beim Verlassen des Extruders auf höchstens die Siedetemperatur von Wasser unter den herrschenden Umgebungsbedingungen (bei Normaldruck also 100°C) abgekühlt. Das so erhaltene Produkt hat eine vergleichsweise offenporige Struktur und kann durch Infusion einer entsprechenden Flüssigkeit in diesen Poren hinsichtlich seiner Eigenschaften modifiziert werden.

Bei diesem Verfahren erfolgt die, durch die beim Verlassen des Extruders auftretende Wasserdampfbildung hervorgerufene, Porung im Texturat nur rein zufällig. Zudem ist die Porenvarianz abhängig von dem eingesetzten Protein, dessen Konzentration und der Prozessführung. Die Vielzahl der Parameter und deren Zusammenhänge sind jedoch komplex, und eine konstante Produktqualität ist nur in einem sehr engen Rahmen gewährleistet. So lässt sich die Porenqualität nur mässig über die Prozessführung steuern. Ein gezielter Einfluss auf die Mikroporung ist nicht möglich.

Es ist eine Aufgabe der vorliegenden Erfindung, die Nachteile des Standes der Technik auszuräumen. Insbesondere sollen Produkte mit möglichst konstanter Porenqualität kontrolliert hergestellt werden können, um unter anderem Biss und Zartheit des Produkts zu verbessern. Weiterhin sollen weitere Phasen auch ohne die im Stand der Technik nötigen Verfahrensschritte des Einfrierens, des Kochens oder der Vakuumbeschichtung in das Produkt eingelagert werden können. Auch die für die Herstellung erforderliche Energie soll möglichst reduziert werden.

Diese Aufgabe wird durch das Verfahren gemäss Anspruch 1 gelöst.

Das erfindungsgemässen Verfahren zur Herstellung von proteinhaltigen Lebensmitteln enthält die folgenden Schritte:
a) Eindosieren von Rohstoffen in einen Extruder, wobei mindestens ein Rohstoff ein Protein ist, vorzugsweise ein pflanzliches Protein,
b) Mischen der Rohstoffe im Extruder zur Erzeugung einer Mischung,
c) Extrudieren der Mischung zur Erzeugung eines Extrudats,
d) Herausführen des Extrudats aus dem Extruder durch eine Kühldüse unter Abkühlung des Extrudats auf eine Temperatur von weniger als 100°C,
wobei im Extruder durch Bereitstellung eines Gases eine kontrollierte Porenbildung durchgeführt wird.

Es wurde erfindungsgemäss überraschend gefunden, dass eine kontrollierte Porenbildung in einem alternativen Fleischprodukt und eine damit verbundene Anpassung der Produkteigenschaften an die Eigenschaft von echtem Fleisch dadurch erreicht werden kann, dass in einem Extruder während des Extrusionsprozesses ein Gas bereitgestellt wird. Im Gegensatz zu dem Verfahren der WO 2012/158023 A1 erfolgt die Porenbildung durch das erfindungsgemässe Verfahren kontrolliert, da durch Bereitstellung einer spezifischen Menge an Gas eine gezielte Steuerung des Porenbildungsprozesses möglich ist.

Die Bereitstellung eines Gases während der Herstellung von Backwaren oder ähnlicher Lebensmittel ist bekannt. In der US-6,207,214 wird bei der Herstellung koreanischer Backwaren durch Extrusion CO₂ in den Extruder eingeleitet. Es handelt sich hierbei jedoch um grundlegend andere Produkte als die vorliegend betroffenen alternativen Fleischprodukte auf Proteinreicher Basis, welche sich hinsichtlich ihrer Eigenschaften stark unterscheiden.

Unter einem Gas wird erfindungsgemäss eine Substanz verstanden, welche unter Normalbedingungen (1 bar, 20°C) gasförmig ist. Beispiele für erfindungsgemäss verwendbare Gase sind CO₂, N₂, N₂O, NH₃ oder SO₂.

Gemäss der vorliegenden Erfindung wird im Extruder ein Gas bereitgestellt, um eine kontrollierte Porenbildung im behandelten Material zu erreichen. Diese Bereitstellung kann erfindungsgemäss dadurch erfolgen,
- dass das Gas über eine Zuführöffnung in den Extruder eingeleitet wird, oder
- dass das Gas im Extruder durch eine Reaktion zwischen einer als Rohstoff zugegebenen gasbildenden Verbindung mit einer als Rohstoff zugegebenen gasfreisetzenden Verbindung freigesetzt wird.

Gemäss einer Ausführungsform der Erfindung enthalten die Rohstoffe daher mindestens eine gasbildende Verbindung und mindestens eine gasfreisetzenden Verbindung. Während des Extrudierens im Schritt c) bildet sich durch eine chemische Reaktion der gasbildenden Verbindung mit der gasfreisetzenden Verbindung ein Gas.

Unter einer gasbildenden Verbindung wird erfindungsgemäss eine Substanz verstanden, welche unter den im Extruder herrschenden Bedingungen mit einer geeigneten gasfreisetzenden Verbindung unter Freisetzung eines Gases umgesetzt wird. Typische Beispiele für eine gasbildende Verbindung sind physiologische akzeptable Salze wie Carbonate oder Hydrogencarbonate, beispielsweise Natriumcarbonat (Na₂CO₃), Kaliumcarbonat (K₂CO₃), oder Natriumhydrogencarbonat (NaHCO₃), aus welchen CO₂ freigesetzt werden kann. Ein anderes Beispiel ist das Hirschhornsalz (eine Mischung aus Ammoniumhydrogencarbonat (NH₄HCO₃), Ammoniumcarbonat ((NH₄)₂CO₃) und Ammoniumcarbamat (NH₄CO₂NH₂)), aus welchem die Gase NH₃ und CO₂ freigesetzt werden können.

Aus diesen gasbildenden Verbindungen kann durch Reaktion mit einer gasfreisetzenden Verbindung ein Gas (besonders bevorzugt CO₂) freigesetzt werden. Darunter kann es sich um jede chemische Verbindung handeln, welche mit der entsprechenden gasbildenden Verbindung unter Gasbildung reagiert. Üblicherweise handelt es sich bei der gasfreisetzenden Verbindung um eine physiologisch akzeptable Säure. Bei der Säure kann es sich beispielsweise um Zitronensäure, eine Phosphorsäureverbindung wie Dinatriumdihydrogendiphosphat oder Monocalciumorthophosphat, Weinsäure oder eines ihrer Salze (wie Kaliumnatriumtartrat (Rochelle-Salz)), Äpfelsäure, Fumarsäure, Adipinsäure oder Glucono-Delta-Lacton handeln. Die Säuren können als freie Säuren, oder in Form ihrer Anhydride oder Salze eingesetzt werden.

Erfindungsgemäss bevorzugt entsteht das bereitzustellende Gas bei dieser Ausführungsform durch eine Säure-Base-Reaktion im Extruder. Beispielsweise kann durch Reaktion des Salzes Natriumhydrogencarbonat (NaHCO₃) mit Zitronensäure (C₆H₈O₇) das Gas Kohlendioxid (CO₂) entstehen.

Durch geeignete Wahl der gasbildenden Verbindung und der gasfreisetzenden Verbindung, vorzugsweise des Salzes und der Säure, und deren Gewichtsanteilen kann die Textur des Extrudats gezielt beeinflusst werden. Auf diese Weise wird eine kontrollierte Einlagerung einer zweiten Phase und gegebenenfalls weiterer Phasen ermöglicht. Dies gewährleistet eine verbesserte Aufnahme von Wasser oder auch Aromaträgern wie Bouillons, Fetten oder Ölen, was sich positiv auf das Bissverhalten der Extrudate auswirkt.

Die gasbildende Verbindung und die gasfreisetzende Verbindung, vorzugsweise das Salz und die Säure, können Trockenrohstoffen beigefügt sein oder werden, die in den Extruder eindosiert werden. Die Säure kann alternativ auch dem Extruder separat in flüssiger Form zugeführt werden.

Bevorzugt sind die gasbildende Verbindung und die gasfreisetzende Verbindung zusammen in den Rohstoffen in einem Anteil von 0,1 Gew.-% bis 5 Gew.-%, besonders bevorzugt 0,2 Gew.-% bis 1,6 Gew.-% vorhanden, bezogen auf das Gesamtgewicht aller in den Extruder eindosierten Rohstoffe. Hierbei ist das Massenverhältnis von gasbildender Verbindung zu gasfreisetzender Verbindung, vorzugsweise von Salz zu Säure, je nach den stöchiometrischen Verhältnissen der entsprechenden Reaktion, vorzugsweise im Bereich von 1:1 bis 6:1, um eine möglichst vollständige Gasfreisetzung zu erreichen.

Gemäss einer weiteren erfindungsgemässen Ausführungsform erfolgt die Bereitstellung des Gases im Extruder durch Einleitung des Gases in den Extruder.

Gemäss dieser erfindungsgemässen Ausführungsform wird somit während des Extrudierens in Schritt c) mindestens ein Gas in das Extrudat eingeleitet. Dies erfolgt üblicherweise durch eine Zuführöffnung des Extruders, welche mit einem Gasbehälter (wie einer Druckflasche) verbunden ist und eine kontrollierte Einleitung von Gas in den Extruder (beispielsweise über ein Ventil) erlaubt. Beispiele für erfindungsgemäss bei dieser Ausführungsform verwendbare Gase sind CO₂, N₂, N₂O, NH₃ oder SO₂, vorzugsweise CO₂ oder N₂. Das Gas kann im gasförmigen Zustand oder alternativ als verflüssigtes Gas eingeleitet werden.

Auch die Einleitung eines Gases sorgt für eine kontrollierte Porenbildung. Im Fall der Verwendung von SO₂ kommt eine mögliche Bildung von Disulfidbrücken mit den im Rohmaterial enthaltenen Proteinen hinzu, durch welche sich ein zusätzlicher Einfluss auf die Textur des Produkts ergibt. Das Gas kann beispielsweise in einer Menge von 0,01 bis 3 Gew.-%, vorzugsweise 0,05 bis 2,5 Gew.-%, bezogen auf das Gesamtgewicht der in den Extruder eindosierten Rohstoffe, in den Extruder eingeleitet werden.

Erfindungsgemäss werden Rohstoffe in einen Extruder eindosiert, wobei mindestens ein Rohstoff ein Protein ist, vorzugsweise ein pflanzliches Protein.

Als Proteinquellen werden vorzugsweise Pflanzen eingesetzt, beispielsweise Hülsenfrüchte (wie etwa Erbsen, Lupinen oder Bohnen, beispielsweise Favabohnen), Getreide (wie etwa Weizen, Soja, Raps oder Sonnenblumen), oder Algen. Es können aber auch tierische Proteine wie Milchprotein oder Molkenprotein oder Proteine aus Muskelfleisch oder Bindegewebe verwendet werden. Es ist aber erfindungsgemäss bevorzugt, Produkte herzustellen, welche frei von tierischen Proteinen sind.

Die proteinhaltigen Rohstoffe werden zusammen mit einer Flüssigkeit in den Extruder dosiert. Wie vorstehend ausgeführt handelt es sich hier um mindestens einen vorstehend beschriebenen proteinhaltigen Rohstoff und eine vorstehend beschriebene Flüssigkeit. Optional können eine gasbildende Verbindung und eine gasfreisetzende Verbindung zugegeben werden, sofern die Bereitstellung des Gases durch Freisetzung des Gases über eine chemische Reaktion dieser Verbindungen erfolgen soll.

Als Flüssigkeiten können Wasser, Boullion und/oder eine ölhaltige Substanz wie beispielsweise einen ölhaltigen Aromaträger eingesetzt werden.

Erfindungsgemäss bevorzugt werden die proteinhaltigen Rohstoffe und die Flüssigkeit in einem derartigen Verhältnis eindosiert, dass der Proteingehalt im Rohmaterial grösser als 50 % ist und besonders bevorzugt im Bereich von 60 % bis 90 % liegt.

Zusätzlich können üblicherweise für die Herstellung alternativer Fleischprodukte verwendete Additive zugegeben werden. Beispielsweise können Salze wie Natriumchlorid, Fette, Öle oder andere Lipide zugegeben werden, vorzugsweise in einer Menge von 0,1 bis 10 Gew.-%, bezogen auf das Gesamtgewicht aller Rohstoffe.

Die erfindungsgemässen Verfahren können zur Herstellung von sowohl Nasstexturaten als auch Trockentexturaten eingesetzt werden. Dabei wird unter einem Nasstexturat ein Extrudat verstanden, bei dem der Feststoffanteil des Extrudats im Schritt c) im Bereich von 20 % bis 60 %, bevorzugt im Bereich von 30 % bis 50 % liegt. Für Nasstexturate hat es sich als vorteilhaft erwiesen, wenn der Proteingehalt in den Trockenrohstoffen grösser als 50 % ist und besonders bevorzugt im Bereich von 60 % bis 90 % liegt. Unter einem Trockentexturat wird ein Texturat verstanden, bei dem der Feststoffanteil des Extrudats im Schritt c) im Bereich von 60 % bis 90 %, bevorzugt im Bereich von 65 % bis 75 % liegt. Für Trockentexturate hat es sich als zweckmässig erwiesen, wenn der Proteingehalt in den Trockenrohstoffen im Bereich von 35 % bis 90 % liegt.

Erfindungsgemäss können handelsübliche Extruder verwendet werden, welche im Stand der Technik zur Herstellung entsprechender Lebensmittelprodukte eingesetzt werden. Beispielhaft sei auf die in der WO 2012/158023 A1 genannten Extruder oder auf die Extruder, insbesondere Doppelschneckenextruder, der Firma Bühler verwiesen. Derartige Extruder weisen vorzugsweise ein L/D-Verhältnis (Länge zu Durchmesser) im Bereich von 20 bis 60, bevorzugt 25 bis 50, und besonders bevorzugt 25 bis 40 auf.

In einem ersten Abschnitt des Extruders werden die vorher abgewogenen Rohstoffe eindosiert. Alternativ können die verschiedenen Rohstoffe dem Extruder auch sequentiell in verschiedenen Abschnitten zugegeben werden.

Vor dem Schritt a) des Eindosierens in den Extruder können ein oder mehrere der Rohstoffe vorkonditioniert werden. Auf diese Wiese lässt sich die Verweilzeit der Proteinmatrix im Prozess beeinflussen. Dabei wird derzeit davon ausgegangen, dass eine längere Verweilzeit zu einer verbesserten Faserstruktur führt, da dann beim Extrudieren eine erhöhte Zahl an quervernetzten Filamenten entsteht. Erfindungsgemäss bevorzugt beträgt die Verweilzeit im Vorkonditionierer 3 bis 600 s, besonders bevorzugt 3 bis 60 s, insbesondere bevorzugt 5 bis 15 s.

Im Extruder werden die eindosierten Rohstoffe miteinander vermischt, so dass eine flüssige, vorzugsweise wässrige Proteinzusammensetzung ausgebildet wird. Der Mischer kann als Schnellmischer ausgebildet sein. Er kann eine Wasser- und Dampfzuleitung aufweisen. Der Extruder kann über eine Wasserzuleitung und optional eine Dampfzuleitung verfügen.

Im Extruder findet eine Verarbeitung der flüssigen, vorzugsweise wässrigen Proteinzusammensetzung statt. Hierbei wird die Zusammensetzung über die Denaturierungstemperatur des Proteins erhitzt, vorzugsweise auf eine Temperatur im Bereich von 80 bis 180°C, besonders bevorzugt 120 bis 160°C, in Abhängigkeit des eingesetzten Proteins. Bevorzugt sind die Gehäuse des Extruders temperiert. Die Zusammensetzung wird unter Druck (üblicherweise 1 bis 60 bar, vorzugsweise 8 bis 20 bar, besonders bevorzugt 10 bis 15 bar) zu einer homogenen Mischung verknetet. Hierbei erfolgt üblicherweise ein Energieeintrag von 10 bis 120 Wh/kg, vorzugsweise 15 bis 30 Wh/kg.

Das erfindungsgemässe Verfahren kann grundsätzlich mit einem Durchsatz im Bereich von 10 bis 500 kg/h betrieben werden. Erfindungsgemäss bevorzugt wird der Prozess mit einem Durchsatz von 10 bis 60 kg/h, vorzugsweise 20 bis 50 kg/h und besonders bevorzugt 30 bis 40 kg/h durchgeführt, wobei das Material im Extruder vorzugsweise eine Haltezeit (Verweilzeit) von mindestens 2 Minuten, bevorzugt mindestens 4 Minuten aufweist.

Das bei Ausführungsform des erfindungsgemässen Verfahrens eingeleitete Gas kann an unterschiedlichen Positionen am Extruder eingeleitet werden - entweder bereits nahe am Eingangsbereich, im Mittelbereich oder im Ausgangsbereich.

Nach dem Extrudieren in Schritt c) wird das Extrudat in einem weiteren Schritt d) durch eine Kühldüse aus dem Extruder herausgeführt, um das Extrudat unter den Siedepunkt von Wasser zu bringen, d.h. unter Normalbedingungen auf eine Temperatur unterhalb von 100°C. Kühldüsen für Extruder sind hinlänglich bekannt. Erfindungsgemäss bevorzugt wird das Extrudat auf eine Temperatur im Bereich von 80 bis 90°C abgekühlt.

Um ein verbessertes Wandgleiten in der Kühldüse und somit eine erleichterte Prozessführung zu erreichen, kann gemäss einer bevorzugten Ausführungsform in einen Verteilkörper des Extruders und/oder in die Kühldüse selbst Öl injiziert werden, beispielsweise in einem Anteil im Bereich von 1 % bis 10 %, bevorzugt im Bereich von 2 % bis 6 %, besonders bevorzugt im Bereich von 3 % bis 4 %, bezogen auf das Gesamtgewicht aller in den Extruder eindosierten Rohstoffe. Beispielsweise wird ein Speiseöl wie Sonnenblumenöl verwendet.

Nach Austritt aus dem Extruder kann das Extrudat in einem weiteren Schritt auf bekannte Weise in geeignete Formen und Grössen geschnitten werden.

Nachfolgend wird die Erfindung anhand von einigen nicht einschränkenden Ausführungsbeispielen näher erläutert.

### A. Herstellung von Nasstexturaten

Als Extruder kann ein vorstehend beschriebener Extruder eingesetzt werden, beispielsweise der Extruder PolyTwin BCTL-42 32L/D der Firma Bühler.

Die Gehäuse des Extruders werden in Abhängigkeit von den verwendeten Proteinen auf eine Temperatur eingestellt, die beispielsweise im Bereich von 80 °C bis 180 °C, bevorzugt im Bereich von 120 °C bis 160 °C liegt. Dabei können die Gehäuse des Extruders auf verschiedene Temperaturen eingestellt werden - beispielsweise in einem Eingangsbereich auf 120 °C, in einem Mittelbereich auf 160 °C und in einem Ausgangsbereich auf 140 °C.

Der Proteingehalt in den Rohstoffen ist vorzugsweise grösser als 50 % und liegt besonders bevorzugt im Bereich von 60 % bis 90 %. Als Proteine können beispielsweise pflanzliche Proteine wie beispielsweise Hülsenfrüchte oder Weizenprotein eingesetzt werden, es können aber auch tierische Proteine wie Milchprotein verwendet werden. Als Flüssigkeiten kann das Extrudat Wasser, Boullion und/oder einen ölhaltigen Aromaträger enthalten. Besonders bevorzugt weist die Flüssigkeit eine Temperatur in der Nähe ihres Siedepunkts auf.

Die Trockenrohstoffe werden in den Extruder eindosiert, wo sie unter Druck (beispielsweise im Bereich von 1 bar bis 60 bar, bevorzugt 8 bar bis 20 bar, besonders bevorzugt 10 bar bis 15 bar) und Temperatureinwirkung zusammen mit der Flüssigkeit zu einer homogenen Zusammensetzung verknetet werden. Im Zuge des Verfahrens werden die Proteine entfaltet und richten sich beim Eintritt in die Kühldüse zu quervernetzten Filamenten aus. Die Zusammensetzung erhitzt sich im Laufe des Prozesses von Umgebungstemperatur bis hin zur für die Denaturierung der Proteine notwendigen Temperatur. Diese beträgt beispielsweise für Sojaproteine in etwa 140 °C. Für Erbsenproteine oder auch Sonnenblumenproteine hat sich eine Bearbeitungstemperatur bei 120 °C als geeignet erwiesen. Je nach Rohstoffqualität können auch 160 °C notwendig sein.

Beim Verlassen des Extruders wird das Extrudat durch eine Kühlvorrichtung geleitet, beispielsweise eine Kühldüse. Diese hat die Aufgabe, die Zusammensetzung auf ein Temperaturniveau unter den gemäss den Umgebungsbedingungen vorherrschenden Siedepunkt zu bringen, beispielsweise auf eine Temperatur im Bereich von 80 °C bis 90 °C. Um dies zu erreichen, wird Kühlwasser mit einer Temperatur im Bereich von 40 °C bis 90 °C, bevorzugt 50 °C bis 70 °C in der Kühldüse verwendet.

Um ein verbessertes Wandgleiten in der Kühldüse und somit eine erleichterte Prozessführung zu erreichen, kann in einen Verteilkörper des Extruders und/oder in die Kühldüse selbst Öl injiziert werden, beispielsweise in einem Anteil im Bereich von 1 % bis 10 %, bevorzugt im Bereich von 2 % bis 6 %, besonders bevorzugt im Bereich von 3 % bis 4 %, bezogen auf das Gesamtgewicht aller in den Extruder eindosierten Rohstoffe. Beispielsweise wird ein Speiseöl wie Sonnenblumenöl verwendet.

Das Extrudat wird mit einem Durchsatz durch den Extruder geführt, der im Bereich von 10 kg/h bis 500 kg/h liegt, beispielsweise im Bereich von 10 bis 60 kg/h, vorzugsweise im Bereich von 20 kg/h bis 50 kg/h, weiter bevorzugt im Bereich von 30 kg/h bis 40 kg/h. Die durch den Extruder eingebrachte spezifische mechanische Energieeinleitung kann im Bereich von 10 Wh/kg bis 120 Wh/kg, bevorzugt im Bereich von 15 Wh/kg bis 30 Wh/kg liegen; sie ist insgesamt von der Rohmaterialmischung abhängig. Die Haltezeit (Verweilzeit) beträgt bevorzugt mindestens 2 Minuten, bevorzugt mindestens 4 Minuten.

Erfolgt die Erzeugung der (Mikro)Porung mittels chemischer Reaktion, sind den Trockenrohstoffen vorzugsweise ein Salz und eine Säure zuzusetzen. Mögliche Salze sind beispielsweise Natriumhydrogencarbonat oder auch Kaliumhydrogencarbonat. Als Säuren können unter anderem Zitronensäure, Weinsäure oder dessen Salz sowie Glucono-Delta-Lacton eingesetzt werden. Zudem kommen phosphathaltige Säureträger in Betracht, wie beispielsweise Dinatriumdihydrogendiphosphat oder Monocalciumorthophosphat. Die Mischungsverhältnisse können hierbei variieren, um die freigesetzte Menge an Gas zu kontrollieren. Bevorzugt sind Verhältnisse von Salz zu Säure im Bereich 1:1 bis 6:1. Als Poren bildendes Gas wird vorzugsweise CO₂ oder NH₃ freigesetzt.

Alternativ zur oben beschriebenen chemischen Gasfreisetzung kann die (Mikro)Porung auch über die Einleitung eines (vorzugsweise unter Druck komprimierten) Gases erfolgen. Beispiele hierfür sind CO₂, N₂ und SO₂. Das Gas, welches flüssig, unter Druck komprimiert sein kann, kann beispielsweise über einen Schlauch in den Extruder geleitet werden. Mittels eines Magnetventils und eines Durchflussmessers kann der Gasstrom geregelt werden. Die Gase werden vorzugsweise im Bereich von 0,05 % bis 3 %, bezogen auf das Gesamtgewicht der in den Extruder eindosierten Rohstoffe, zudosiert.

Durch den Einsatz eines Vorkonditionierungsschritts kann die Prozessflexibilität deutlich erhöht werden. So lässt sich die Verweilzeit der Proteinmatrix im Prozess beeinflussen. Die Verweilzeit im Vorkonditionierer kann im Bereich von 3 s bis 600 s liegen, bevorzugt im Bereich von 3 s bis 60 s, besonders bevorzugt im Bereich von 5 s bis 15 s.

Eine beispielhafte Rezeptur für Herstellung eines Fleischimitats mittels eines Salzes und einer Säure ist wie folgt:

| | | |
|---|---|---|
| Sojaproteinkonzentrat | 40 % | 14 kg/h |
| Salz | 2 % | 0,7 kg/h |
| Wasser | 57 % | 19,9 kg/h |
| Natriumhydrogencarbonat | 0,75 % | 0,27 kg/h |
| Zitronensäure | 0,25 % | 0,087 kg/h |

Zur Herstellung eines Fleischimitats durch Einleitung eines Gases kann beispielsweise die folgende Rezeptur verwendet werden:

| | | |
|---|---|---|
| Sonnenblumenproteinkonzentrat | 40 % | 14 kg/h |
| Salz | 2 % | 0,7 kg/h |
| Wasser | 57 % | 19,9 kg/h |
| CO₂ gasförmig injiziert | 1 % | 0,35 kg/h |

Der Wassergehalt im Endprodukt ist vorteilhafterweise grösser als 40 % und liegt bevorzugt im Bereich von 50 % bis 70 %.

### B. Herstellung von Trockentexturaten

Zur Herstellung von Trockentexturaten unter Einleitung von CO₂ kann wie folgt vorgegangen werden:
kann ein vorstehend beschriebener Extruder eingesetzt werden, beispielsweise der Extruder PolyTwin BCTL-42 32L/D der Firma Bühler.

Der Proteingehalt in den Rohstoffen liegt vorzugsweise im Bereich von 35 % bis 90 %. Der Rohstoff kann in Form eines Presskuchens, eines Konzentrats oder eines Isolats vorliegen. Als Proteine können beispielsweise pflanzliche Proteine wie beispielsweise Hülsenfrüchte, Getreide oder Algen eingesetzt werden, es können aber auch tierische Proteine wie Molkenprotein verwendet werden. Als Flüssigkeiten kann das Extrudat Wasser, Boullion und/oder eine ölhaltige Substanz enthalten. Der Wassergehalt im Rohmaterial zum Zeitpunkt des Prozesses soll dabei mindestens 10% und vorzugsweise 25 bis 40% betragen.

Die Trockenstoffe werden in den Extruder dosiert, wo sie unter Druck (beispielsweise im Bereich von 10 bar bis 80 bar, bevorzugt 20 bar bis 40 bar) und Temperatureinwirkung zusammen mit der Flüssigkeit zu einer homogenen Zusammensetzung verknetet werden. Im Zuge des Verfahrens werden die Proteine entfaltet und richten sich zu quervernetzten Filamenten beim Eintritt in die Kühldüse aus. Die Zusammensetzung erhitzt sich im Laufe des Prozesses von Umgebungstemperatur bis hin zur für die Denaturierung der Proteine notwendigen Temperatur. Diese beträgt beispielsweise für Sojaproteine etwa 140 °C.

Wie für Nasstexturate kann auch bei Trockentexturaten ein Kühlwerkzeug zum Einsatz kommen. Dieses kann wesentlich kürzer als jenes für Nasstexturate gestaltet sein. Direkt am Austritt aus der Düse kann ein Schneiden des Extrudats mittels eines herkömmlichen Extruderschneidapparats erfolgen.

Das Extrudat wird mit einem Durchsatz durch den Extruder geführt, der im Bereich von 100 kg/h bis 1000 kg/h liegt, beispielsweise im Bereich von 100 kg/h bis 200 kg/h, bevorzugt von 130 kg/h bis 160 kg/h, oder im Bereich von 600 kg/h bis 1000 kg/h. Die durch den Extruder eingebrachte spezifische mechanische Energieeinleitung kann im Bereich von 50 Wh/kg bis 200 Wh/kg liegen, beispielsweise im Bereich von 130 Wh/kg bis 160 Wh/kg oder im Bereich von 70 Wh/kg bis 100 Wh/kg.

Durch den Einsatz eines optionalen Vorkonditionierungsschritts kann die Prozessflexibilität deutlich erhöht werden. Hier kann durch die Einleitung von Dampf und/oder Wasser, insbesondere Heisswasser, eine erste Entfaltung der Proteinstrukturen in die Wege geleitet werden. Die Verweilzeit im Vorkonditionierer kann im Bereich von 3 s bis 600 s liegen, bevorzugt im Bereich von 3 s bis 60 s, besonders bevorzugt im Bereich von 5 s bis 20 s. Eine beispielhafte Rezeptur für die Herstellung eines Fleischimitats lautet wie folgt:

| | | |
|---|---|---|
| Sojapresskuchen | 74 % | 111 kg/h |
| Wasser | 25 % | 37,5 kg/h |
| CO₂ gasförmig injiziert | 1 % | 0,35 kg/h |

## Patentansprüche

1. Verfahren zur Herstellung von proteinhaltigen Lebensmitteln, enthaltend die Schritte:
a) Eindosieren von Rohstoffen in einen Extruder, wobei mindestens ein Rohstoff ein Protein ist, vorzugsweise ein pflanzliches Protein,
b) Mischen der Rohstoffe im Extruder zur Erzeugung einer Mischung,
c) Extrudieren der Mischung zur Erzeugung eines Extrudats,
d) Herausführen des Extrudats aus dem Extruder durch eine Kühldüse unter Abkühlung des Extrudats auf eine Temperatur von weniger als 100°C,
**dadurch gekennzeichnet, dass** im Extruder durch Bereitstellung eines Gases eine kontrollierte Porenbildung durchgeführt wird.

2. Verfahren gemäss Anspruch 1, **dadurch gekennzeichnet, dass** die Bereitstellung des Gases im Extruder durch Einleiten dieses Gases in den Extruder erfolgt.

3. Verfahren gemäss Anspruch 1, **dadurch gekennzeichnet, dass** die Bereitstellung des Gases im Extruder durch Bildung des Gases aufgrund einer Reaktion einer als Rohstoff zugegebenen gasbildenden Verbindung mit einer als Rohstoff zugegebenen gasfreisetzenden Verbindung erfolgt.

4. Verfahren gemäss Anspruch 2, **dadurch gekennzeichnet, dass** die gasbildende Verbindung ein physiologisch akzeptables Salz ist, vorzugsweise ausgewählt aus der Gruppe bestehend aus Carbonaten, insbesondere Natriumhydrogencarbonat oder Kaliumhydrogencarbonat.

5. Verfahren gemäss Anspruch 3 oder 4, **dadurch gekennzeichnet, dass** die gasfreisetzende Verbindung eine physiologisch akzeptable Säure ist, vorzugsweise ausgewählt aus der Gruppe bestehend ausZitronensäure, Phosphat, Weinsäure oder eines ihrer Salze, Glucono-Delta-Lacton, Dinatriumdihydrogendiphosphat und Monocalciumorthophosphat.

6. Verfahren gemäss einem der Ansprüche3 bis 5, **dadurch gekennzeichnet, dass** die gasbildende Verbindung und die gasfreisetzende Verbindung zusammen
in den im Schritt a) eindosierten Rohstoffen in einem Anteil von 0,1 Gew.-% bis 5 Gew.-%, bezogen auf das Gesamtgewicht aller eindosierten Rohstoffe, vorhanden sind.

7. Verfahren gemäss einem der Ansprüche 3 bis 7, **dadurch gekennzeichnet, dass** das Massenverhältnis von gasbildender Verbindung zu gasfreisetzender Verbindung im Bereich von 1:1 bis 6:1 liegt.

8. Verfahren gemäss einem der vorangehenden Ansprüche, **dadurch gekennzeichnet, dass** das Gas ausgewählt ist aus der Gruppe bestehend aus CO₂, N₂, N₂O oder SO₂.

9. Verfahren gemäss Anspruch 8, **dadurch gekennzeichnet, dass** das Gas in einer Menge von 0,01 bis 3 Gew.-%, bezogen auf das Gesamtgewicht der in Schritt a) eindosierten Rohstoffe, in den Extruder eingeleitet wird.

10. Verfahren gemäss einem der Ansprüche 1 bis 9,
**dadurch gekennzeichnet, dass**
- der Proteingehalt in den Trockenrohstoffen grösser als 50 % ist und besonders bevorzugt im Bereich von 60 % bis 90 % liegt und
- der Feststoffanteil des Extrudats im Schritt c) im Bereich von 20 % bis 60 %, bevorzugt im Bereich von 30 % bis 50 % liegt.

11. Verfahren gemäss Anspruch 10,
**dadurch gekennzeichnet, dass** die durch den Extruder eingebrachte spezifische mechanische Energieeinleitung im Bereich von 10 Wh/kg bis 120 Wh/kg, bevorzugt im Bereich von 15 Wh/kg bis 30 Wh/kg liegt.

12. Verfahren gemäss einem der Ansprüche 1 bis 9,
**dadurch gekennzeichnet, dass**
- der Proteingehalt in den Trockenrohstoffen im Bereich von 35 % und bis 90 % liegt und
- der Feststoffanteil des Extrudats im Schritt c) im Bereich von 60 % bis 90 %, bevorzugt im Bereich von 65 % bis 75 % liegt.

13. Verfahren gemäss Anspruch 12,
**dadurch gekennzeichnet, dass** die durch den Extruder eingebrachte spezifische mechanische Energieeinleitung im Bereich von 50 Wh/kg bis 200 Wh/kg, beispielsweise im Bereich von 130 Wh/kg bis 160 Wh/kg oder im Bereich von 70 Wh/kg bis 100 Wh/kg liegt.

14. Verfahren gemäss einem der vorangehenden Ansprüche,
**dadurch gekennzeichnet, dass** im Extruder eine Temperatur im Bereich von 80 °C bis 180 °C, bevorzugt im Bereich von 120 °C bis 160 °C eingestellt wird.

15. Verfahren gemäss einem der vorangehenden Ansprüche,
**dadurch gekennzeichnet, dass** in einen Verteilkörper des Extruders und/oder in die Kühldüse selbst Öl injiziert werden, vorzugsweise in einem Anteil im Bereich von 1 % bis 10 %, bezogen auf das Gesamtgewicht aller in den Extruder eindosierten Rohstoffe.
